# EUROPEAN PATENT SPECIFICATION

(11) **EP 1 291 323 B1**
(45) Date of publication and mention of the grant of the patent: **12.07.2006**
(21) Application number: 01121572.0
(22) Date of filing: 10.09.2001
(51) Int. Cl.: C02F 1/46

(54) **Replaceable flow-through capacitors for removing charged species from liquids**
Austauschbare Durchflusskondensatoren zum Entfernen geladener Arten von Flüssigkeiten
Condensateur amovible à écoulement continu pour enlever des espèces chargées de liquides

(43) Date of publication of application: 12.03.2003
(73) Proprietor: Lih-Ren, Shiue, Chun-Lin Hsiang, Hsinchu Hsien (TW)
(72) Inventor: Shiue, Lih-Ren, Chun-Lin Hsiang, Hsinchu-Hsien (TW); Shiue, Chia-Chann, Lungtan Shiang (TW); Wang, S-Yen, Taishan Shiang Taipei County (TW); Hsieh, Fei-Chen, Shi Chiu (TW); Lee, Chin-Hui, Tubei City, Hsinchu (TW); Lo, Wan-Ting, Hsinchu (TW); Hsieh, Yu-His, Pushin Shiang, Changhua (TW)
(74) Representative: Becker Kurig Straus

(56) References cited:
- EP-A- 0 863 520
- US-A- 5 192 432
- US-A- 5 779 891

## Description

### BACKGROUND OF THE INVENTION

### FIELD OF THE INVENTION

This invention relates generally to capacitive deionization (CDI ) of liquids containing charged species, such as industrial waste streams, city sewage and seawater, etc. More particularly, this invention relates to replaceable flow-through capacitors (FTCs) for removing charge-carrying materials from inorganic and organic aqueous solutions.

### BACKGROUND OF THE INVENTION

Water is one of the most precious resources to human. It is appropriate to describe the importance of water as "water gives us life". About three-quarter of the earth surface is covered by water, 98% of which is salt water and the remaining 2% is fresh water. Most of the fresh water is trapped in polar ice caps leaving less than 1% be suitable for direct use. As population grows with increasing urbanization and industrialization, which augment water consumption and waste generation, many countries in the world are thus suffering from water scarcity and environmental pollution. According to a UN prediction, there will be 48 countries, accounting for 32% of the world population, lack of fresh water by the year 2025. Water is vital to both the quality of life and prosperity of economy. Contaminated water can impart illness to people and cost governments millions of dollars to clean the polluted sites. Without fresh water, the daily life and activities of human will be hampered. Providing sufficient sources of fresh water to their people may be the responsibility of governments, yet it is the obligation of people on this globe to conserve water use, to recover useful resources and to reduce pollution.

Desalination of seawater is likely the most economical way to produce fresh water. Seawater is free, unlimited and available all year long unaffected by weathers. Seawater also has the highest content of total dissolved solids (TDS) among all brackish waters. Furthermore, liquid wastes, whether organic or inorganic in nature, frequently contain charged species resulted from hydrolysis, decomposition, flocculation, biological or chemical reactions of solutes. The total amount of charged species in seawater and liquids are expressed as TDS in terms of ppm (parts per million). Whether in desalination or waste treatments, reduction of TDS or deionization is one of the major goals of a purification protocol which may include sedimentation, adsorption, filtration, ozonation, etc. The aforementioned processes are arranged at either upstream or downstream of deionization for pre-treating or post-treating feed liquids. TDS of feed liquids has to be reduced to a certain level of ppm for domestic consumption or industrial applications. Deionization may be achieved using some popular techniques such as ion-exchange, distillation, reverse osmosis (RO), and electrodialysis. In comparison, CDI is relatively new and less known to the general public. In choosing a deionization method, one has to consider the cost of materials and operation, permeate flux (or yield), as well as salt rejection rate.

Most ion-exchange resins for deionization are expensive synthesized materials, which will release relatively benign ions in exchange for toxic ions. With use, the resins will become saturated and require regeneration. Regeneration of ion-exchange resins demands the use of strong acids or strong bases, as well as a lot of rinsing water. Hence, ion-exchange is water-wasteful, and it generates secondary pollution from chemicals used for regeneration. In order to attain fresh water, heat must be invested to seawater or raw waters in a distillation pot. Ions are then left behind as sludge in the pot. Distillation is an energy intensive process requiring a large operation space, for example, an evaporation column of more than 100m (>300ft) tall is employed as taught in U.S. Pat. No. 4,636,283 issued to Nasser. Nevertheless, distillation is the most widely used method in the desalination of seawater in the world. Commercially, RO is the second most popular desalination technique. It uses membranes to extract fresh water from brackish waters, while ions are still present in the feed waters. RO depends on high pressure, e.g., 5515-8273 kPa (800-1200 psig) to force the permeate (pure water) to pass through the nano-pores of the membranes. High operation pressure and low permeate flux are two disadvantageous characters of RO. While a high operation pressure of RO means a high operation cost, a low permeate flux imparts low throughputs. Lastly, electrodialysis utilizes both a DC electric field and ion-permeable membranes for deionization. There are at least three compartments, *i.e*., anode, middle and cathode, in each electrodialysis unit. Brackish waters flow in the middle compartment, and ions are drawn to the anode or the cathode compartment by electrostatic attraction in conjunction with selective permeation of membranes. Both the electrodes and the membranes of electrodialysis are extremely costly for treating large quantity of liquids. In terms of pollution reduction, ions are not entrapped or collected in the membrane techniques such as RO and electrodialysis. Therefore, these techniques are merely for liquid purification methods rather than for pollution reduction. On the contrary, CDI is a technique that can perform both purification and pollution reduction with high recycle rates of feed liquids.

While solid particles are easily removed by a filtering media, charged species can be effectively detained by an electric field. It is a natural phenomenon that ions respond swiftly and reversibly to an electrostatic attraction. Within liquids containing charged species, such electrostatic attraction is most conveniently created between two parallel conductive plates under an application of an electric current. As charged species flow through the charged plates, they are quickly adsorbed by the plates, resulting in the reduction of TDS. Such a method of desalination is named as capacitive deionization (CDI), and the setup for carrying CDI is known as flow-through capacitor (FTC). The application of FTC was published three decades ago by J. Newman et. al., in J. Electrochem Soc.: Electrochemical Technology, March 1971, Pages 510-517, entitled "Desalting by Means of Porous Carbon Electrodes". It is incorporated by reference herein. Three representative prior arts of CDI are cited here to examine their commercial perspective, they are U.S. Patent No. 5,779,891 issued to Andelman, No.5,858,199 to Hanak and No.5,954,937 to Farmer. All three patents are also incorporated by reference herein. The '891 patent uses graphite foil as conductive backing and activated carbon as ion-adsorbing material to form electrodes by physical compression. No chemical bonding, which is more reliable in electric connection than physical compression, exists between the active material and the substrate. A gold compression contact is also used to bind the electrode leads and the wire leads, which are connected to a DC power supply. The inclusion of precious metal will economically prevent the FTC from becoming a consumer product. Furthermore, platinum or other catalytic metal is doped with the carbon electrodes in '891 patent for electrochemically destroying chlorinated hydrocarbons (CHCs). For a higher efficiency of detoxification, CHCs are better treated with ozone than electrolysis. In order to attain the shortest and the straightest flow path, holes are cut on the electrodes of FTC in '891 patent for aligning with the perforation of the liquid-feeding pipe. Not only the adsorbing area is compromised, the specific orientation of the electrodes also complicates the manufacturing process, which again will increase the cost of the devices and impair the commercial merit of the product.
For the separation of ionic substances from liquids, the patent '199 utilizes a combination of an electric field and a compound centrifugal force or Coriolis force. Incorporating a mechanical rotator in the apparatus results in a high operation cost and is difficult to use. In addition to carbons, the '199 patent also proclaims the use of mixed metal oxides such as tantalum and ruthenium oxides as the active material for ions adsorption. The oxides are expensive and not suitable for treating a large quantity of liquids. An expensive, synthesized aerogel carbon is employed as the ion-adsorbing material in the '937 patent for desalting. Such a carbon material is prepared from the polycondensation of resorcinol with formaldehyde followed by super critical point drying in liquid CO₂ under a pressure as high as 6205 kPa (900 psi), and a carbonization of the dried gel at 500-1200°C. The preparation of a single batch takes as long as 2 weeks to complete according to U.S. Pat. No.4,997,804 issued to Pekala, which is incorporated by reference herein. The lengthy preparation in conjunction with high professing pressures and temperatures will impart high costs to the materials required for constructing the FTC. Furthermore, the '937 patent uses gaskets, bolts, nuts, end plates and multi pairs of electrode to assemble a multi-stage FTC. Such a complex arrangement of FTC is prone to leaks and lacks commercial viability.
Further, U.S. Patent No. 5,192,432 issued to Andelman describes a flow-through capacitor comprising a spirally wound plurality of adjacent layers including a first electrically conductive backing layer comprising a film layer of aluminum, tantalum and graphite, a first high surface area electrically conductive layer comprising activated carbon or palladium or platinum black, a spacer layer, a second electrically conductive layer, a second spacer layer. The materials used are expensive and increase the costs of such a flow-through capacitor.
CDI is truly a viable technology for reducing the TDS of liquids. However, more research is needed to identify economical materials for use in CDI and to identify FTC devices that provide an easy mass-production and a user-friendly operation for the technique to become an affordable commercial means for recycling used liquids and waste reduction, as well as for generating fresh water from seawater.

### SUMMARY OF THE INVENTION

It is an object of the present invention to provide a flow-through capacitor comprising active materials being low-cost and economical.
The object of the present invention is achieved by providing a first electrode, the first electrode comprising an active material and an electronically conductive foil, wherein the active material and the electronically conductive foil are integrated into a first flexible monolithic sheet and wherein said active material includes a hydrated iron compound having a chemicals composition of FeₓO_{y}H_{z}, where 1.0<x<3.0, 0.0<y<4.0, and 0.0<z<1.0; a first divider disposed on the first electrode; a second electrode disposed on the first divider, the second electrode comprising the active material and the electrically conductive foil, wherein the active material and the electronically conductive foil are integrated into a second flexible monolithic sheet; and a second divider disposed on the second electrode, wherein the first electrode, the first divider, the second electrode and the second divider are wound concentrically into a hollow-center roll, and the first divider and the second divider form a gap between the first and the second electrodes in the roll assembled, and said divider guides fluids to flow transversely and outwardly through an entire length of the electrodes of the flow-through capacitor so that the fluids use a longest path in the flow-through capacitor before exiting the capacitor.
Removal of ions by CDI utilizes a common mechanism as energy storage in supercapacitors, (i.e. supercapacitors can store up to several thousands of farad (F) of charges). Both CDI and supercapacitors mainly depend on double layer capacitance (DLC), as first characterized by Helmholtz in 1879, for deionization or for energy storage. According to the instant invention, nanoparticles including ferrites, such as hydrated iron compound FeₓO_{y}H_{z}, where 1.0 ≤ x ≤ 3.0, 0.0 ≤ y ≤ 4.0, and 0.0 ≤ z ≤ 1.0, and the main component of the particles is the black magnetite (Fe₃O₄) are first synthesized. Thereafter, by means of roller coating, powder coating or electrophoretic deposition, the said nanoparticles are secured to suitable current collectors to form conformal, monolithic electrodes of FTC for waste treatments and desalination. Preparation of the hydrated powders uses inexpensive starting materials, and the manufacturing procedures are quick and simple. The ion-adsorbing materials of the present invention are thus economical.
FTC of the instant invention is constructed from concentrically winding two sheets of electrodes interposed with polymeric dividers into a hollow-center roll. The central opening provides an insertion of a perforated pipe for feeding liquids to the FTC, while the dividers perform three tasks: 1) providing an insulation to the electrodes, 2) confining fluids within the FTC, and 3) creating a transverse flow of fluids inside the capacitor. Under the driving force of a peristatic pump, liquids flow freely, horizontally and outwardly through the entire length of electrodes before leaving the capacitor. Ions, thereby, have the highest opportunity to contact all accessible surface areas of the electrodes for adsorption. Not only the quantity of active materials used to fabricate the electrodes is minimum, both fabrications of the electrodes and the capacitors can be easily automated. The FTCs production hence becomes affordable consumer products for liquid purification and desalination. As known to those skilled in the art, the capacitors can be completely regenerated under a flushing with a clean solvent coupled with a quick reversion of the polarity of electrodes. Moreover, the FTC of the present invention is inexpensive; thus, it is dispensable. The capacitor can also be replaced and disposed when regeneration appears ineffective in restoring the deionization capability. Both the ion-adsorbing materials and the current collector of the replaceable FTC of the present invention are recyclable and environment friendly.

Just like the commercial packages of adsorbing/filtering carbons, ion-exchange resins and RO membranes, which are normally in a compact form for easy replacement, the FTC of the present invention is designed in a free-standing configuration. Such a FTC can be placed in a housing holder equipped with input and output ports for liquids, two electric leads for connection to a power source, and a cap with gaskets for hermetic sealing. All components of the housing holder can be precisely fabricated by injection molding. Replacement of a used FTC with a new one is as easy as changing battery for a flashlight. As soon as the FTC is placed in the housing holder, a liquid feeding pipe is inserted to the center of FTC roll, electrode leads are connected to the electric pins atop the holder cap using snap-on connectors, then the holder is sealed by hand tightening the threaded cap. It takes less than one minute to complete the restoration of a CDI treating unit without using any tool. CDI can be operated by a DC power at as low as 0.5 Volt and 100 mA, which can be easily provided by batteries, solar cells and fuel cells. Comparing to distillation, RO and electrodialysis, power consumption of CDI is much lower. Low DC voltages are needed only to retain charged species on the electrode surface, whereas chemical reactions or electrolysis should be avoided for they are detrimental to energy efficiency and the lifetime of electrodes. Electricity is used instead of chemicals for regenerating the electrodes of FTC, therefore no secondary pollution is produced. Nevertheless, precious ions such as Au³⁺ and Pd²⁺ can be collected, concentrated, and converted to useful forms using the CDI technique.

Being compact, light and battery-operational, CDI is truly a mobile desalting technique for liquid purification and desalination. In addition to easy incorporation of CDI with an existing waste-liquids treatment system, the instant invention further offers economical ion-adsorbing materials and user-friendly FTC package.

It is to be understood that both the foregoing general description and the following detailed description are exemplary, and are intended to provide futher explanation of the invention as claimed.

### BREIF DESCRIPTIONS OF THE DRAWINGS

The advantages of the present invention, together with its realization, may be better understood by referring to the following description taken in conjunction with the accompanying drawings. In the drawings, like reference numbers generally refer to the same components viewed from different angles. The drawings illustrate the embodiments of the invention and, together with the description, serve mainly to elucidate the principles of the present invention.

**FIG.1** is a cross-sectional view of the inlet and the outlet of liquid inside a CDI (capacitive deionization) cartridge holder for a flow through capacitor (FTC).

**FIG.2** is a perspective view of a concentric winding of electrodes and dividers into a capacitor roll. Liquid inlet pipe can be inserted to the center of roll.

**FIG.3** is a pattern of molded divider with vertical porous supports and horizontal strips, and the latter confines liquid and defines liquid flow within the FTC.

**FIG.4** is a top view of a CDI cartridge showing the liquid inlet and outlet, the outer electric leads, as well as the package of a FTC.

**FIG.5A** illustrates the conductivity of every 50ml collection of effluent of a NaCl solution flowing through setups containing 1, 2 and 3 flow-through capacitors; **5B** illustrates the amount of ions removed in the first 50ml collection of the FTCs containing 1, 2 and 3 flow-through capacitors, respectively.

### DETAILED DESCRIPTION OF THE INVENTION

Water crisis is a current or an imminent affair to many areas in the world. As far as the contaminants in waters and other liquids are concerned, heavy metals and charged species are the major pollutants. Being soluble in liquids, they are grossly characterized as total dissolved solids (TDS) and expressed in ppm. In many occasions, as TDS of a liquid is reduced to a certain level of ppm, the "contaminated" liquid will become useful. For example, the TDS of seawater is virtually 35,000 ppm everywhere, seawater, however, is suitable for irrigation purposes when TDS is reduced to 500 ppm. If TDS of the same water is lower than 200 ppm, it becomes potable without a salty taste. Removal of TDS is the result of desalting or deionization, which is most conveniently accomplished by applying an electrostatic field using a capacitor configuration. Simple ions and charged complex species are drawn instantaneously to the electrodes under the application of a DC voltage. Charged species remain on the surface of electrodes as long as a DC voltage is present. Obviously, the larger the adsorbing area, the more ions are adsorbed and removed from the feed liquids. However, upon the termination of the electrical application, most of the detained contaminants are released, and a complete regeneration only requires a quick reversion of the polarities of the electrodes. In other words, electricity is employed for both deionization and regeneration. This is one advantage of CDI over the ion-exchange technique, the most popular way of desalting. As the latter demands chemicals for regenerating resins, a secondary contamination is resulted.

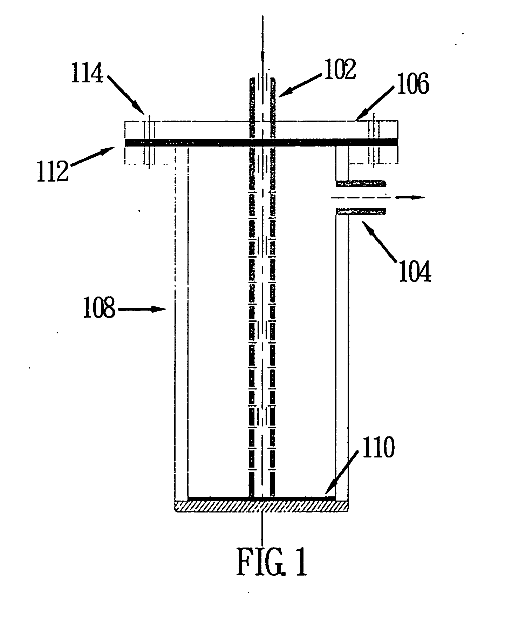

The instant invention applies a proved active material of supercapacitors for preparing the ion-adsorbing electrodes for CDI. In order to attain as large a surface area as possible for the electrodes, nanopowders of ferrites, such as the black magnetite (Fe₃O₄) and its composites, are prepared using a sol-gel technique or electrolysis. Based on capacitance measurements and other tests, the qualified powders are converted into electrodes for constructing rolls of flow through capacitor (FTC). Together with a liquid feeding pipe, FTC is placed in an enclosed container to form a CDI treating unit. FIG **1** shows the cross-sectional view of a liquid input and a liquid output inside the housing holder where FTC is omitted for the ease of an illustration. This is similar to the housing holders for containing packages of adsorbing/filtering carbons, ion-exchange resins and RO membranes. Both the liquid inlet pipe **102** and the holder body **108** can be constructed by injection molding using engineering plastics such as acrylics, polycarbonate, PVC, PE or FRP. After liquid radiates from the perforation of the central pipe **102,** it will travel through the whole length of electrodes of the FTC before exiting the holder via the outlet **104.** Liquids are directed to flow transversely and outwardly over every inch of accessible surface area of electrodes, hence, the contact time between the charged species and the electrodes of FTC is enhanced. As the treated liquids use the longest path of FTC, charged species can be most efficiently adsorbed. Liquid leaks are prevented by attaching the holder cap **106** to the holder **108** with the compression of gaskets **110** and **112.** The holder cap **106** is molded using the same material as that for **102** and **108,** while gaskets **110** and **112** are made of neoprene, butyl rubber or silicone rubber. Holes **114** are drilled around the cap **106** and on the brim of the holder **108** for securing bolts and nuts. In another embodiment, both the cap **106** and the holder **108** can be threaded to fit each other for hand tightening. The formation of a FTC package and the generation of liquid channels are elaborated, respectively, in the subsequent paragraphs.

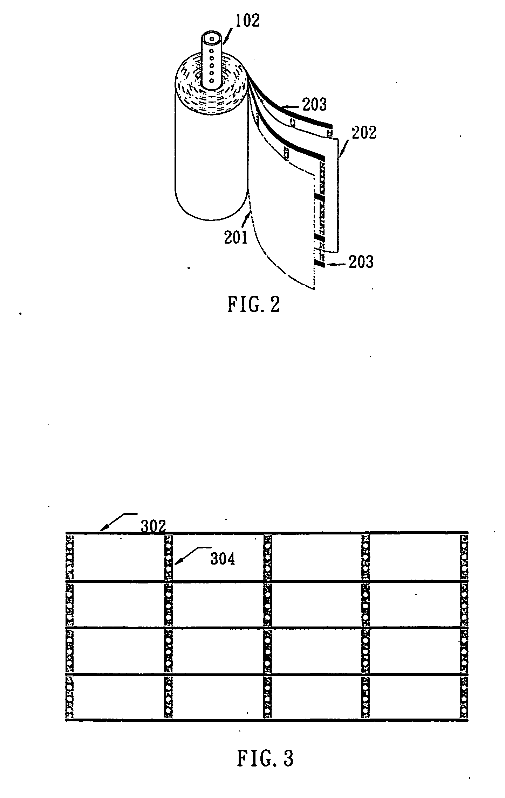

FIG **2** shows one preferred embodiment of the structure of a FTC package in which two electrode sheets, **201** and **202,** and two identical divider sheets **203** are concentrically wound into a roll with an opening at the center of the roll. The fabrication of the said FTC packages is easily automated with winding machines that are commonly used in the capacitor and battery industry. Sheets of electrode and divider in desired widths can be continuously fed to the machine for winding into a roll of a desired diameter. After the roll is cut and secured with a tape, a free-standing FTC package is formed. Actually, the FTC package is a supercapacitor without electrolyte and a housing case. Once the electrodes are cut, a current collector is exposed and burs are formed as well, which may cause electrical short and other harms to the FTC package. Therefore, rectifying procedures such as de-bur and passivation should be taken. The central opening of FTC package is made to fit the liquid feeding pipe **102** with a desirable outer diameter (OD) and inside diameter (ID), for example, an OD greater than 6mm and ID greater than 5mm, respectively. As seen in FIG **2**, holes, for example 1/16" diameter, are evenly distributed at about 1/2" apart on opposite sides of the feeding pipe **102.** Depending on the desirable handling capability of FTC package, the dimensions of the pipe **102,** in terms of OD and ID, as well as the diameter and number of perforated holes for the feeding liquids can be adjusted accordingly. The CDI housing holder **108** and the feeding pipe **102** should be insulated from the FTC package. No electric communication should exist between the capacitor and the holder. Electrodes **201** and **202** are prepared by coating a conductive metal foil such as aluminum, copper, titanium, stainless steel or nickel by an active material, such as, magnetite (Fe₃O₄) or its composites using various deposition methods, wherein the active material has a conductivity of no less than 10⁻² Siemen/cm and a mangnetic flux density of no less than 10 Gauss. All deposition methods in forming the electrodes, for example, roller coating, dip coating, spin coating, power coating or electrophoretic deposition, can be easily automated as well. If a coating method, for example, such as roller coating, is used, the aforementioned powders are mixed with a binder, for example, polyvinylidene fluoride (PVDF) or polytetraethylene fluoride (PTFE), in a suitable solvent to form a coating paste. While identical electrodes are used for fabricating the FTC packages, their polarities are determined by the manner of connection between the electrodes and an outer power supply. Either electrode **201** or **202** can be the anode by connecting to the positive pole of a power supply, the other electrode **202** or **201** then becomes the cathode. Either arrangement makes no difference to the deionization performance of a FTC package. As known to those skilled in the art, the substrate foil carrying the ion-adsorbing material also conducts electrons, it is thus named as a current collector. The current collector will not improve the conductivity of the ion-adsorbing material, but it will affect the power consumption and the lifetime of the FTC. Though it is not shown in FIG **2**, electric leads can be tabs of the substrate foil, or can use other metallic pins spot welded or mechanically crimped to the current collector. Neither the current collector nor the electric leads should be in direct contact with the feed liquids, otherwise chemical reactions may occur and the efficiency of CDI is impaired.

One embodiment to form liquid channels inside the FTC packages is illustrated in FIG **3.** A molded divider comprising horizontal strips **302** and vertical supports **304,** where the strip **302** is thicker than the support **304,** for example, 1 mm *vs* 0.1 mm, is used to guide the liquid flow inside the FTC. The horizontal strips **302** are made in a shape of rectangular bands having the dimensions of about 0.5 mm to 1 mm in height and about 1mm in width. The middle strips are about 30 mm apart. The distance between the top strip and the bottom strip is slightly lower than the height of the electrodes, for example, 2mm off the height of the electrodes. The vertical supports **304** can be of any width that is sufficient to support the strips **302** with a minimal coverage of the electrode surface. The vertical supports **304**, which are at least 30 mm apart, have a width of about 2mm and a thickness of about 0.1 mm. With the dividers **203** closely interposed between the electrodes **201, 202** (as shown in Figure 2), the top and bottom strips of the divider, which are leveled with the edges of the electrodes, will confine liquids within the FTC package, whereas the middle strips create multiple transverse channels of about (0.5 to 1) mm x 30 mm space for liquid flow under virtual zero restriction. Once the liquid radiates from the feeding pipe **102 (as shown in Figure 1)**, it will flow horizontally and outwardly within the defined channels. Following the channels, liquid will run over all accessible surface area of the electrodes. Since the supports **304** take up a significant amount of the surface area of the electrodes, holes are made on the supports to compensate the area loss. Nevertheless, the capacitance of capacitors is determined by the distance between electrodes. As smaller gap yields a higher capacitance on one hand, it produces a greater restriction to liquid-flow on the other. The height of the dividing strips is thereby a balance between capacitance and liquid-flow resistance. The electrode gap can vary from 0.3 mm to 1 mm, or preferably from 0.5 mm to 1 mm. Another embodiment of fabricating the dividing strips without the vertical supports is to use stencil-printing of 1 mm x 1 mm bands of an elastic polymer such as silicones, rubbers or polyurethane longitudinally across the electrodes. Integration of the dividing strips with the electrodes can simplify the fabrication process of FTC packages. In the present invention, either molded or printed dividers will perform three tasks: 1) providing an insulation to the electrodes to prevent electric shorts, 2) confining fluids within the FTC packages, and 3) defining a fluid flow path inside the FTC packages. In addition to flexibility, the polymeric material used for constructing the dividers for the FTC packages should be robust and resistant to contaminants including acids, bases, salts, organic materials, and microorganisms that may be present in the feed liquids.

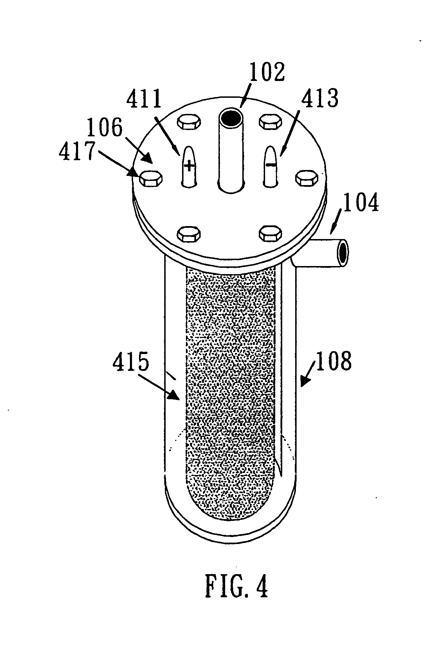

FTC is the heart of the CDI technique for liquid purification and desalination. If CDI ever becomes a popular technology as filtration, ion-exchange and reverse osmosis for used in waste liquids treatment, the use of the FTC should be as convenient as its competitive counterparts in the better known technologies, which are generally packed in cylindrical forms and are replaceable. The general rule of thumb is the use of a replaceable component in any waste-liquids treating method should be as easy as changing light bulbs or batteries. The FTC package of the present invention as described in the previous paragraphs is designed to fulfill the above requirement. Though the FTC package can stand-alone and perform waste liquids treatment independently, it is better used in conjunction with a holder as shown in FIG **4**. Figure 4 is a top view of the holder as that shown in FIG **1**, thus the same reference numbers are used for the common parts. As seen in FIG **4**, a replaceable FTC package **415** is enclosed in the holder body **108** by six nuts **417** on the holder cap **106**. Another sealing method is to construct engaging threads on the cap **106** and the holder **108** to allow the setup to be closed by hands. There are two electric pins **411** and **413** atop the holder cap **106** for connecting to a power supply, for example, dry battery, a fuel cell or a solar cell. An electrical connection between the electric pins **411** and **413** and the electrode leads (not shown in Figure) of the FTC package **415** can be completed by snap-on connectors. Waste liquids are fed to the holder **108** through the inlet **102**, and liquids are directed to flow through the FTC **415** in a longitudinal manner before exiting the holder through the outlet **104**. There is no direct communication between the inlet **102** and the outlet **104**. Liquid has to flow through the entire length of the capacitor before reaching the outlet **104**. From time to time, only the FTC package **415** needs to be replaced, other components can be used indefinitely. Because both inorganic and organic aqueous solutions are employed as electrolytes in the supercapacitors, the FTC packages are capable of removing ionic species from all kinds of waste-liquid, regardless the waste liquid is an inorganic or organic aqueous solution, so long as ions are present in the liquids. Based upon the desirable throughput of CDI, the dimension of the FTC package **415**, which is measured by its diameter and height, can be fabricated accordingly. Black magnetite powders or its composites have been employed in a preferred embodiment of the present invention to construct the FTC packages **415** having a dimension of about 60mm x 150mm for developing commercial models of FTC to be used in TDS reduction by CDI. A key feature of the present invention is to allow the treated liquids to flow through the longest path of the FTC package so that all the effective surface area of the electrodes of FTCs are utilized for adsorbing the charged species. The highest throughput rates of deionization can thus be achieved. Several experimental data are cited below only to demonstrate, rather than limiting, the present invention in offering an economic and user-friendly CDI technique for liquid purification and desalination.

### Example 1

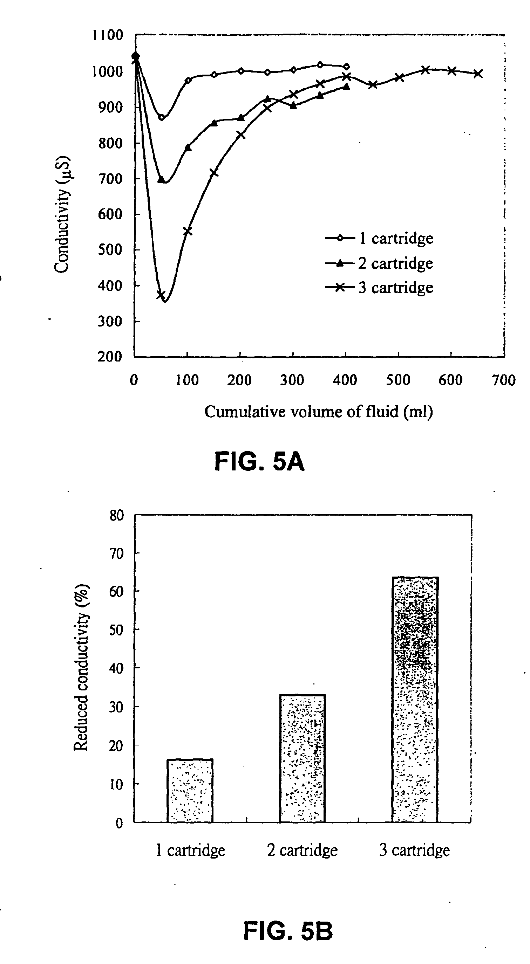

FTCs are constructed by roller-coating a homogeneous paste of hydrated iron compound, which is prepared in-house, on aluminum foils with the dimension of 150 mm x 490 mm x 0.1 mm. The paste is based on the following formulation:
*1 g Fe*_{*3*}*O*_{*4*} *and 0.03 g PVDF [poly(vinylidene fluoride) are mixed with 1.5 ml NMP (N-methyl-2-pyrrolidone) and homogenized*
After the solvent, NMP, is evaporated by an IR-light illumination or other heating means, electrodes and dividers are wound into a roll of FTC as shown in **FIG 2**. Two tabs from the same foils of anode and cathode are used for electric connection to a DC power source. With the liquid-feeding pipe **102** inserted into the center of the roll, the FTC is placed in a plastic holder body **108**, wherein an inside diameter of the holder body **108** is 60 mm and a height is 150 mm. Then, the holder **108** is sealed by securing the cap **106** to the body **108** using bolts and nuts, while the two taps are extended to the outside of the holder 108. A combination of the FTC and the housing holder as assembled is termed as a cartridge. A single cartridge, or a multiple of cartridges connected in series, is employed for deionizing the various liquids as described below.
Liquid: NaCl aqueous solution with a conductivity of 1040 µS
Voltage: 1.0 DC Volt
Liquid flow rate: 50 ml/min
Number of cartridge: 1, 2, and 3
The effluent is collected for every 50ml followed by a measurement with a conductance meter. The conductivities of the first 50ml collection for 1, 2, and 3 cartridges are measured as 842 µS, 676 µS and 385 µS, respectively, which represent a 19%, a 35% and a 63% deionization or removal of ions for each set of the FTC assembly. **FIG 5B** lists the amount of ions removed as the fluid only flows through each set of the FTC assembly, while **FIG 5A** shows the fast increase of conductivity in the later portions of the effluent collected, indicating that the electrode surface of the FTCs is quickly occupied. Nevertheless, the effluent never reaches the concentration level of the feedstock. If CDI is the sole technique available for removing charged species in liquid treatments, the size and the number of FTC can be custom-made to meet the requirements. The manner of liquid-flow in the CDI system can also be meticulously arranged to attain the desirable goals.

### Example 2

Using deionized water, the used FTCs from experiment 1 are flushed till the effluent showing low conductivities (in single digits of µS). The regenerated FTCs are then applied in the following test.
Liquid: CuSO₄ aqueous solution with conductivity of 1420 µS
Voltage: 1.0 DC Volt
Liquid flow rate: 50 ml/min
Number of cartridge: 2
The conductivity of the first 50ml collection of effluent is measured as 724 µS indicating a 49% removal of ions as the fluid simply flows through the capacitors under a very low voltage.

### Example 3

Similar method of regeneration as example 2 is used to prepare FTCs for desalination. Seawater is obtained from a creek to the Pacific Ocean at the west coast of Taiwan. In compliance with the measuring limit of our conductance meter, the sample is diluted 50 times using deionized water. It is estimated that the sample has a TDS (total dissolved solids) of 20,000 ppm. Without any further pre-treatment, the diluted liquid is deionized as follows.
Liquid: diluted seawater with conductivity of 793 µS
Voltage: 1.0 DC Volt
Liquid flow rate: 50 ml/min
Number of cartridge: 2
The conductivity of the first 50ml collection of effluent is measured as 619 µS, accounting for a 21% removal of ions. Comparing to the same number of cartridge in example 1, the current case appears to be inferior in deionization. This is probably due to a more complex composition in seawater than that in a NaCl solution.

### Example 4

A composite powder, Fe₃O₄/C, is made by incorporating activated carbon in the amount equivalent to 20% by weight of Fe₃O₄, which can be synthesized in a batch, with the starting materials for a sol-gel preparation. As in example 1, paste of the composite powder is formulated to fabricate the FTC and assembly for purification of a brine water.
Liquid: NaCl aqueous solution with conductivity of 1082 µS
Voltage: 1.0 DC Volt
Liquid flow rate: 50 ml/min
Number of cartridge: 1
The conductivity of the first 50ml collection of effluent is measured as 779 µS, representing a 28% removal of ions as the fluid merely flows through the single capacitor. As the activated carbon provides more surface area than Fe₃O₄ does, FTC yields a higher deionization rate from using the composite than the straight metal oxide. Such observation is consistent with the theory of energy storage of supercapacitors. From the aforementioned examples, it is obvious that the present invention is a viable tool for liquid purification and desalination. With economic materials and easy fabrication, CDI using the present invention can be added to the list of techniques frequently used in pollution control and environment protection.

## Claims

1. A free-standing flow-through capacitor, comprising:
- a first electrode (201), wherein the first electrode (201) comprises an active material and an electronically conductive foil, wherein the active material and the electronically conductive foil are integrated into a first flexible monolithic sheet and wherein said active material includes a hydrated iron compound having a chemical composition of FeₓO_{y}H_{z} where 1.0 ≤ x ≤ 3.0, 0.0 ≤ y ≤ 4.0, and 0.0 ≤ z ≤ 1.0;
- a first divider (203) disposed on the first electrode (201);
- a second electrode (202) disposed on the first divider (203), wherein the second electrode (202) comprises the active material and the electrically conductive foil, wherein the active material and the electronically conductive foil are integrated into a second flexible monolithic sheet; and
- a second divider disposed on the second electrode (202), wherein the first electrode (201), the first divider (203), the second electrode (202) and the second divider are wound concentrically into a hollow-centre roll, the first divider (203) and the second divider form a gap between the first and second electrodes (201, 202) in the roll assembled, and said divider guides fluids to flow transversely and outwardly through an entire length of the electrodes of the flow-through capacitor so that the fluids use a longest path in the flow-through capacitor before exiting the capacitor.

2. The flow-through capacitor in accordance with claim 1, wherein said centre opening allows an insertion of a liquid-feeding pipe (102) with an outside diameter greater than 6 mm, and an inside diameter greater than 5 mm, wherein the feeding pipe has holes arranged evenly on opposite sides of the pipe to deliver fluids to the flow-through capacitor.

3. The flow through capacitor in accordance with claim 1, wherein said divider is a sheet with a pattern containing horizontal strips (302) of 1 mm in width and about 0.5 mm to about 1.0 mm in height, which are inter-connected by vertical porous supports (304) with a width of about 2 mm and a thickness of about 0.1 mm, wherein a distance between a top strip and a bottom strip is about 2 mm off a height of the first and second electrodes (201, 202), while middle strips are separated at a space of less than 30 mm, and a spacing between the vertical supports (304) is greater than 30 mm.

4. The flow-through capacitor in accordance with claim 1, wherein said divider is formed by stencil printing horizontal strips (302) of 1 mm in width and 0.5 mm to 1.0 mm in height directly on the electrodes.

5. The flow-through capacitor in accordance with claim 1, wherein said FeₓO_{y}H_{z} is Fe₃O₄.

6. The flow-through capacitor in accordance with claim 1, wherein said active material is a composite compound containing Fe₃O₄ and other component of the composite compound is selected from the group consisting of activated carbon, graphite, tin oxide, zinc oxide and titanium oxide.

7. The flow-through capacitor in accordance with claim 1, wherein said active material has a conductivity of no less than 10⁻² Siemens/cm.

8. The flow-through capacitor in accordance with claim 1, wherein said active material has a magnetic flux density of no less than 10 Gauss.

9. The flow-through capacitor m accordance with claim 1, wherein said electronically conductive foil is selected from the group consisting of aluminum, copper, nickel, stainless steel and titanium.

10. The flow-through capacitor in accordance with claim 1, wherein said electrodes (201, 202) are prepared by roller coating, dip coating, spin coating, powder coating, or electrophoretic deposition of the active material on the electronically conductive foil.

11. The flow-through capacitor in accordance with claim 1, wherein said electrodes are able to adsorb ionic species on a surface of the electrodes and perform deionization of liquids upon an application of a voltage to the electrodes (201, 202).

12. The flow-through capacitor in accordance with claim 1, wherein said electrodes are able to adsorb ions by an electrostatic attraction using a DC voltage of less than 1.0 volt, which is provided by a power supply, dry batteries, secondary batteries, fuel cells, or solar cells.

13. The flow-through capacitor in accordance with claim 12, wherein the DC voltage is provided by a power supply, dry batteries, secondary batteries, fuel cells or solar cells.

14. The flow-through capacitor in accordance with claim 1, wherein said electrodes depend on a double-layer capacitance for adsorbing charged species contained in the feed liquids.

15. The flow-through capacitor in accordance with claim 1, wherein the first electrode (201) is an anode and the second electrode (202) is a cathode, by connecting the first electrode (201) to a positive pole of a power supply and the second electrode (202) to a negative pole of the power supply.

16. The flow-through capacitor in accordance with claim 1, wherein the second electrode (202) is an anode and the first electrode (201) is a cathode, by connecting the second electrode (202) to a positive pole of a power supply and the first electrode (201) to a negative pole of the power supply.

## Patentansprüche

1. Freistehender Durchström-Kondensator, umfassend:
- eine erste Elektrode (201), wobei die erste Elektrode (201) ein aktives Material und eine elektrisch leitende Folie umfasst, wobei das aktive Material und die elektrisch leitende Folie in einer ersten flexiblen monolithischen Folienbahn integriert sind und wobei das aktive Material eine hydratisierte Eisenverbindung einschließt, das eine chemische Zusammensetzung von FeₓO_{y}H_{z} aufweist, wobei 1,0≤x≤3,0,0,0≤y≤4,0 und 0,0 ≤z≤ 1,0;
- ein erstes Trennelement (203), das auf der ersten Elektrode (201) angeordnet ist;
- eine zweite Elektrode (202), die auf dem ersten Trennelement (203) angeordnet ist, wobei die zweite Elektrode (202) das aktive Material und die elektrisch leitende Folie umfasst, wobei das aktive Material und die elektrisch leitende Folie in einer zweiten flexiblen monolithischen Folienbahn integriert sind; und
- ein zweites Trennelement, das auf der zweiten Elektrode (202) angeordnet ist, wobei die erste Elektrode (201), das erste Trennelement (203), die zweite Elektrode (202) und das zweite Trennelement konzentrisch zu einer mittig ausgesparten Rolle gewunden sind, wobei das erste Trennelement (203) und das zweite Trennelement eine Lücke zwischen der ersten und zweiten Elektrode (201, 202) bilden, die in der Rolle montiert sind, und wobei das Trennelement Fluide führt, damit sie transversal und nach außen durch eine gesamte Länge der Elektroden des Durchström-Kondensators fließen, so dass die Fluide einen längsten Weg in dem Durchström-Kondensator benutzen, eh sie den Kondensator verlassen.

2. Durchström-Kondensator nach Anspruch 1, wobei die mittlere Öffnung ein Einführen eines flüssigkeitszuführenden Rohrs (102) erlaubt mit einem Außendurchmesser größer als 6 mm und einem Innendurchmesser größer als 5 mm, wobei das Zuführungs-Rohr Löcher aufweist, die auf gegenüberliegenden Seiten des Rohrs gleichmäßig angebracht sind, um Fluide an den Durchström-Kondensator zu liefern.

3. Durchström-Kondensator nach Anspruch 1, wobei das Trennelement eine Folienbahn mit einem Muster ist, das horizontale Streifen (302) von 1 mm Breite und ungefähr 0,5 mm bis ungefähr 1,0 mm Höhe beinhaltet, welche durch vertikale porige Stützelemente (304) mit einer Breite von ungefähr 2 mm und einer Dicke von ungefähr 0,1 mm miteinander verbunden sind, wobei ein Abstand zwischen einem oberen Streifen und einem unteren Streifen ungefähr 2 mm von der Höhe der ersten und zweiten Elektrode (201, 202) abweicht, während mittlere Streifen in einem Abstand von weniger als 30 mm voneinander getrennt sind, und wobei ein Abstand zwischen den vertikalen Stützelementen (304) größer ist als 30 mm.

4. Durchström-Kondensator nach Anspruch 1, wobei der Trennelement durch horizontale Schablonendruck-Streifen (302) mit einer Breite von 1 mm und einer Höhe von 0,5 mm bis 1,0 mm direkt auf der Elektrode gebildet ist.

5. Durchström-Kondensator nach Anspruch 1, wobei das FeₓO_{y}H_{z} Fe₃O₄ ist.

6. Durchström-Kondensator nach Anspruch 1, wobei das aktive Material eine Komposit-Verbindung ist, die Fe₃O₄ beinhaltet und andere Komponenten der Komposit-Verbindung aus der Gruppe bestehend aus Aktivkohle, Graphit, Zinnoxid, Zinkoxid und Titanoxid ausgewählt werden.

7. Durchström-Kondensator nach Anspruch 1, wobei das aktive Material eine Leitfähigkeit von nicht weniger als 10⁻² Siemens/cm aufweist.

8. Durchström-Kondensator nach Anspruch 1, wobei das aktive Material eine magnetische Flußdichte von nicht weniger als 10 Gauß aufweist.

9. Durchström-Kondensator nach Anspruch 1, wobei die elektrisch leitende Folie aus der Gruppe bestehend aus Aluminium, Kupfer, Nickel, rostfreiem Stahl und Titan ausgewählt ist.

10. Durchström-Kondensator nach Anspruch 1, wobei die Elektroden (201, 202) durch Walzbeschichten, Tauchbeschichten, Rotationsbeschichten, Pulverbeschichten oder elektrophoretische Abscheidung des aktiven Materials auf der elektrisch leitenden Folie, angefertigt werden.

11. Durchström-Kondensator nach Anspruch 1, wobei die Elektroden in der Lage sind ionische Teilchen auf einer Oberfläche der Elektroden zu adsorbieren und Deionisierung von Flüssigkeiten durch das Anlegen einer Spannung an die Elektroden (201, 202) durchzuführen.

12. Durchström-Kondensator nach Anspruch 1, wobei die Elektroden in der Lage sind Ionen durch eine elektrostatische Anziehung zu adsorbieren, wobei eine Gleichspannung von weniger als 1,0 Volt verwendet wird, welche durch einen Netzanschluss, Trockenbatterien, sekundär Batterien, Brennstoffzellen oder Solarzellen geliefert wird.

13. Durchström-Kondensator nach Anspruch 12, wobei die Gleichspannung durch einen Netzanschluss, Trockenbatterien, sekundär Batterien, Brennstoffzellen oder Solarzellen geliefert wird.

14. Durchström-Kondensator nach Anspruch 1, wobei die Elektroden von einem Doppelschichtkondensator zum Absorbieren geladener Teilchen abhängig sind, die in der zugeführten Flüssigkeit enthalten sind.

15. Durchström-Kondensator nach Anspruch 1, wobei durch das Verbinden der ersten Elektrode (201) mit einem positiven Pol eines Netzanschlusses und der zweiten Elektrode (202) mit einem negativen Pol des Netzanschlusses die erste Elektrode (201) eine Anode ist und die zweite Elektrode (202) eine Kathode ist.

16. Durchström-Kondensator nach Anspruch 1, wobei durch das Verbinden der zweiten Elektrode (202) mit einem positiven Pol eines Netzanschlusses und der ersten Elektrode (201) mit einem negativen Pol des Netzanschlusses die zweite Elektrode (202) eine Anode ist und die erste Elektrode (201) eine Kathode ist.

## Revendications

1. Condensateur amovible à écoulement continu, comprenant :
une première électrode (201), ladite première électrode (201) comprenant une matière active et une feuille électroniquement conductrice, la matière active et la feuille électroniquement conductrice étant intégrées en une première nappe monolithique souple, et ladite matière active contenant un composé de fer hydraté, ayant comme composition chimique FeₓO_{y}H_{z}, dans laquelle 1,0≤x≤3,0, 0,0≤y≤4,0 et 0,0≤z≥5,0 ;
un premier diviseur (203) disposé sur la première électrode (201) ;
une seconde électrode (202) disposée sur le premier diviseur (203), la seconde électrode (202) comprenant la matière active et la feuille électriquement conductrice, la matière active et la feuille électriquement conductrice étant intégrées en une seconde nappe monolithique souple ;
et un second diviseur disposé sur la seconde électrode (202), la première électrode (201), le premier diviseur (203), la seconde électrode (202) et le second diviseur étant enroulés concentriquement sur un rouleau à centre creux, le premier diviseur (203) et le second diviseur formant un espace entre les première et seconde électrodes (201, 202) dans le rouleau assemblé, et ledit diviseur guidant les fluides de manière qu'ils s'écoulent transversalement et vers l'extérieur sur toute la longueur des électrodes du condensateur à écoulement continu, de telle sorte que les fluides suivent le trajet le plus long dans le condensateur à écoulement continu avant de sortir du condensateur.

2. Le condensateur à écoulement continu selon la revendication 1, dans lequel ladite ouverture centrale permet l'insertion d'un tube d'alimentation en liquide (102) ayant un diamètre extérieur supérieur à 6mm et un diamètre intérieur supérieur à 5mm, le tube d'alimentation comportant des trous répartis uniformément sur les côtés opposés du tube, de manière à fournir des fluides au condensateur à écoulement continu.

3. Le condensateur à écoulement continu selon la revendication 1, dans lequel ledit diviseur consiste en une nappe présentant un motif comportant des bandes horizontales (302) d'une largeur de 1 mm et une hauteur d'environ 0,5mm à environ 1,0mm, qui sont inter-connectées par des supports verticaux poreux (304) ayant une largeur d'environ 2 mm et une épaisseur d'environ 0,1 mm, la distance entre le haut d'une bande et le bas d'une bande étant d'environ 2mm inférieure à la hauteur de la première et de la seconde électrodes (201, 202), tandis que les bandes intermédiaires sont séparées d'un espace inférieur à 30mm et que l'espacement entre les supports verticaux (304) est supérieur à 30mm.

4. Le condensateur à écoulement continu selon la revendication 1, dans lequel ledit diviseur est formé par l'impression au pochoir de bandes horizontales (302) de 1 mm de largeur et de 0,5mm à 1,0mm de hauteur directement sur les électrodes.

5. Le condensateur à écoulement continu selon la revendication 1, dans lequel ledit FeₓO_{y}H_{z} est Fe₃O₄.

6. Le condensateur à écoulement continu selon la revendication 1, dans lequel ladite matière active est un composé composite contenant Fe₃O₄ et un autre composant du composé composite est choisi dans le groupe constitué par le charbon activé, le graphite, l'oxyde d'étain, l'oxyde de zinc, et l'oxyde de titane.

7. Le condensateur à écoulement continu selon la revendication 1, dans lequel ladite matière active présente une conductivité qui n'est pas inférieure à 10⁻² siemens/cm.

8. Le condensateur à écoulement continu selon la revendication 1, dans lequel ladite matière active présente une densité de flux magnétique qui n'est pas inférieure à 10 gauss.

9. Le condensateur à écoulement continu selon la revendication 1, dans lequel ladite feuille électroniquement conductrice est choisie dans le groupe constitué par l'aluminium, le cuivre, le nickel, l'acier inoxydable et le titane.

10. Le condensateur à écoulement continu selon la revendication 1, dans lequel lesdites électrodes (201, 202) sont préparées par enduction au rouleau, revêtement par immersion, revêtement par rotation, revêtement à la poudre, ou dépôt par électrophorèse de la matière active sur la feuille électroniquement conductrice.

11. Le condensateur à écoulement continu selon la revendication 1, dans lequel lesdites électrodes présentent la capacité d'adsorber des espèces ioniques sur une surface des électrodes et de provoquer la dé-ionisation des liquides par application d'une tension aux électrodes (201, 202).

12. Le condensateur à écoulement continu selon la revendication 1, dans lequel lesdites électrodes présentent la capacité d'adsorber des ions par attraction électrostatique, par utilisation d'une tension continue inférieure à 1,0 volt, qui est fournie par une source de courant électrique, des batteries sèches, des batteries secondaires, des cellules à combustible ou des cellules solaires.

13. Le condensateur à écoulement continu selon la revendication 12, dans lequel la tension continue est fournie par une source de courant électrique, des batteries sèches, des batteries secondaires, des cellules à combustibles ou des cellules solaires.

14. Le condensateur à écoulement continu selon la revendication 1, dans lequel l'action desdites électrodes est fonction d'une capacitance à double couche pour l'adsorbtion d'espèces chargées contenues dans les liquides introduits.

15. Le condensateur à écoulement continu selon la revendication 1, dans lequel la première électrode (201) est une anode et la seconde électrode (202) est une cathode, la première électrode (201) étant connectée à un pôle positif d'une source de courant électrique et la seconde électrode (202) étant connectée à un pôle négatif de la source de courant électrique.

16. Le condensateur à écoulement continu selon la revendication 1, dans lequel la seconde électrode (202) est une anode et la première électrode (201) est une cathode, la seconde électrode (202) étant connectée à un pôle positif d'une source de courant électrique et la première électrode (201) étant connectée à un pôle négatif de la source de courant électrique.
